# EUROPEAN PATENT SPECIFICATION

(11) **EP 3 715 290 B1**
(45) Date of publication and mention of the grant of the patent: **24.09.2025**
(21) Application number: 20165417.5
(22) Date of filing: 24.03.2020
(51) Int. Cl.: B65G 67/20, B65G 21/14, B65G 41/00

(54) **ITEM CONVEYING APPARATUS FOR A MATERIAL HANDLING ENVIRONMENT**
VORRICHTUNG ZUM FÖRDERN VON ELEMENTEN FÜR EINE MATERIALHANDHABUNGSUMGEBUNG
APPAREIL DE TRANSPORT D'ARTICLE POUR UN ENVIRONNEMENT DE MANIPULATION DE MATÉRIAU

(30) Priority: 29.03.2019 US 201962826202 P; 28.02.2020 US 202016804925
(43) Date of publication of application: 30.09.2020
(73) Proprietor: TRANSNORM SYSTEM GmbH, 31177 Harsum (DE)
(72) Inventor: MESTERHEIDE, Ingo, Morris Plains, NJ 07950 (US)
(74) Representative: Haseltine Lake Kempner LLP

(56) References cited:
- EP-A1- 2 918 521
- DE-A1- 2 231 495
- FR-A1- 2 728 147
- JP-A- H11 116 059
- JP-A- S5 295 473
- US-A1- 2012 255 835
- US-A1- 2016 280 477

## Description

### TECHNOLOGICAL FIELD

Example embodiments described herein relate generally to an item conveying apparatus for a material handling environment.

### BACKGROUND

Generally, in material handling environments like, but not limited to, distribution centers, warehouses, inventories, or shipping centers, various machines such as, conveyors, palletizers, robotic arms, truck loaders/unloaders, and/or conveyor overhead units are used for performing various operations. To achieve lower overhead costs at retail stores, now-a-days, in-store product counts at distribution centers have been reduced and products-in-transit on vehicles like, trucks, trailers etc. are also counted as part of available store stock of an inventory. Typically, in the material handling environments, vehicles can be loaded using manual labor if the containers are separate articles or can be loaded/unloaded using forklifts if the containers are palletized, or often by using other truck loader/unloader units. Using human laborers to unload and load large vehicle shipments can be physically difficult and can be costly due to the time and labor involved. DE2231495A1 discloses an item conveying apparatus according to the preamble of claim 1 and a method for handling items according to the preamble of claim 12. Said document discloses a horizontally and vertically movable loading platform which is supplied with sacks from a conveyor. The platform is attached to an overhead support frame in such a way that its delivery side can reach any point of the loading area of a truck or container. The sacks which slide off the conveyor onto a loading tray are pushed sideways by a blade so that they form a row which is equal to the width of the loading area. The tray is then pulled away from underneath the sacks so that they form a stack when the process is repeated. The platform is liftable to provide enough clearance for the loaded vehicle to pass out.

### SUMMARY

The following presents a simplified summary to provide a basic understanding of some aspects of the disclosed material handling system. Its purpose is to present some concepts of the described features in a simplified form as a prelude to the more detailed description that is presented later.

The invention provides an item conveying apparatus according to claim 1 and a method for handling items according to claim 12. Optional features are set out in the dependent claims.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments are shown and described with respect to the figures presented herein, in which:
FIG. 1 schematically illustrates a first side-view representing an item conveying apparatus in a first state;
FIG. 2 schematically illustrates a second side-view representing the item conveying apparatus in a second state;
FIG. 3 schematically illustrates a third side-view representing the item conveying apparatus in a third state;
FIG. 4 schematically illustrates a first top view of the item conveying apparatus in a first operational state;
FIG. 5 schematically illustrates a second top view of the item conveying apparatus in a second operational state;
FIG. 6 schematically illustrates a third top view of the item conveying apparatus in a third operational state;
FIG. 7 schematically illustrates an item handling unit of the item conveying apparatus in a first operating state;
FIG. 8 schematically illustrates the item handling unit of the item conveying apparatus in a second operating state;
FIG. 9 schematically illustrates the item handling unit of the item conveying apparatus in a third operating state;
FIG. 10 schematically illustrates the item handling unit of the item conveying apparatus in a fourth operating state;
FIG. 11 schematically illustrates a side view of a sectional floor unit of the item handling unit of the item conveying apparatus;
FIG. 12 schematically illustrates an example flowchart depicting operations performed by the item conveying apparatus.

### DETAILED DESCRIPTION

Some embodiments of the present invention will now be described more fully hereinafter with reference to the accompanying drawings, in which some, but not all embodiments of the invention are shown.

The term 'distribution center' or 'material handling environment' refers to an environment related to, but not limited to, manufacturing of the items, inventory storage of the items, packaging and unpackaging of the items, preparing customer orders, recording items related information based on scanning and identification of the items, and shipment processing (including shipping and logistics distribution of the items). It may also be understood that material handling environment described herein may refer to an environment having various equipment, including, for instance, any of machines like conveyor belt units, sorters, palletizers, and other scanning and identification based equipment's (including, but not limited to, barcode scanners, RFID readers, and bi-optic scanners) for tracking and tracing items as the items are processed while preparing customer orders for shipping.

A material handling environment may typically include various conveying arrangements, inter alia, a plurality of conveyors as exemplary supply arrangements for conveying items (e.g. shipment containers, totes, parcels, packages, cartons, and/or the like) from one location to another. In some examples, the material handling environment may also include sorters for sorting the items. Further, in some examples, the material handling environment may include various units like, but not limited to, scanners, imagers, actuators, controllers, robotic manipulators, and/or the like to perform one or more functions such as, but not limited to, detecting one or more addresses written on shipment containers, handling the containers, guiding the containers by means of various conveying units, weighing the containers, encoding data on labels affixed to the containers, etc. Furthermore, in some examples, item carriers such as, transport vehicles, trucks, pallet jacks, lorry, semi-trailer truck etc. may also be used to carry shipments within or outside of the material handling environment (e.g. warehouse). In some examples, a material handling installation site may include a transport carrier (e.g. a trailer) that may be parked at least in front of a conveyor to carry out the shipments from the trailer onto the conveyor or move the shipments into the trailer from the conveyor. Accordingly, items may be conveyed via the conveyors to the item carriers or vice versa. Having said that, in some examples, a floor of installations site, e.g. warehouse, may have a definite height (for example 1.2m) which may correspond to a conventional height of storage space floor of the transport carriers. In some examples, conveyors in the installation site may then terminate on or in front of a correspondingly high loading ramp so that there is produced from the loading ramp a substantially planar transition to a storage space floor of a trailer located in front of the loading ramp. However, in some cases, a height of installation site can be greater or lower than the height of floor of the trailer, which often requires raising up or down of vehicle unloaders and moving or re-positioning the vehicle unloaders.

Manual loading/unloading of items can be costly, less productive, and inefficient. Further, item loading/unloading devices (for example, robotic manipulator, a boom conveyor also known as telescopic conveyor etc.) can be used typically in scenarios where raising up or lowering down a manipulator for handling items is desired. Said that, using the item loading/unloading devices within or outside of the material handling environment has associated challenges due to its complex design and large footprint.

The invention provides an item conveying apparatus for conveying, loading, and/or unloading items in a material handling environment. The items referred herein may correspond to for example, but not limited to, pallets, goods, cartons, articles, containers, shipments, parcels, totes, packages, boxes, and/or the like. For purpose of brevity, these items handled by the item conveying apparatus (i.e. pallets, goods, cartons, articles, containers, shipments, parcels, totes, packages, boxes, and/or the like) are referred hereinafter collectively as 'items' throughout the description. The item conveying apparatus includes a lift device and a conveyor. The lift device and the conveyor are suspended from a ceiling of a material handling site. The conveyor is engaged with the lift device. The ceiling may correspond to a roof, vault, and/or the like, of a material handling installation site. In an example, the conveyor may be operated for use with various transport carriers, such as, but not limited to, trucks, lorry, pallet jacks, or unit load devices (ULDs) typically used for transporting items. In this aspect, the lift device through which the conveyor can be suspended can be configured to manipulate a positioning of the conveyor.

The conveyor includes a conveyor frame and a plurality of conveyor segments. The plurality of conveyor segments define a conveying surface for movement/conveyance of items. Further, each conveyor segment of the plurality of conveyor segments is movable relative to the conveyor frame. The plurality of conveyor segments are pivotably engaged relative to each other, so as to support a relative movement between two conveyor segments.

The material handling environment may include a control unit for example, a controller (e.g., but not limited to, controller of a warehouse management system) that may control operations of one or more components in the material handling environment. The control unit of the material handling environment may generate a command for operation of the conveyor. In this regard, upon receiving the command from the control unit, at least one conveyor segment of the conveyor is adapted to move relative to the conveyor frame. At least one conveyor segment is adapted to extend outwards to move the conveyor into an operational position. Furthermore, the plurality of conveyor segments of the conveyor are adapted to retract or pulled backwards to move the conveyor into a parking position or a retracted position. Details of the operational position, parking position, and retracted position of the conveyor are described later at various instances throughout the description.

The item conveying apparatus includes a lift device used for suspending the conveyor from the ceiling. In an example, the lift device can be an inverted scissor lift. The lift device is configured to manipulate a position of the conveyor and to change a height of conveyor relative to a surface. In an example, the lift device can include at least two actuator elements e.g. actuator arms that can be engaged with an actuation platform coupled to a portion of the conveyor. Further, the actuator elements of the lift device can be adapted to raise or lower the actuation platform thereby raising or lowering a height of the conveyor relative to a surface.

The conveyor of the item conveying apparatus can be coupled to an item handling unit that can be configured to support automated loading and/or unloading of items through the conveyor. The item handling unit can be suspended from the ceiling through the lift device and can be coupled to the conveyor. According to an example embodiment, the item handling unit can include an item transfer section and a sectional floor unit. The item transfer section can correspond to an enclosure or a box module (like, but not limited to, a container carriage, a bogey, or a cargo carriage) that can receive a heap or stack of items that may be unloaded from a transport carrier (e.g. a vehicle). In accordance with an example embodiment, at least a portion of the item transfer section can be engaged to the lift device. Further, the sectional floor unit can be coupled to the item transfer section and can include one or more transfer flaps and a sectional floor garage defined beneath the conveyor.

In some examples, the lift device can allow powered movement of the items on a conveying surface of the conveyor, in an elevated position (i.e. ceiling mounted installation) without causing obstruction to ongoing movement of operators and/or machines within a material handling site. Further, the item conveying apparatus including the lift device and ceiling suspended conveyor can offer a light-weighted design, reduced footprint, and easy to install capability within the material handling environment at a much lesser cost, compared to conventional floor mounted conveyors. In this regard, ceiling mounted installation of the conveyor at the ceiling of the material handling environment, results in reducing a footprint or operational space of the material handling environment occupied by the conveyor. Furthermore, as stated earlier, such an installation and operation of the conveyor using the lift device can avoid causing obstruction of workers or other machines within the material handling environment.

Having described an example embodiments at a high level, the design of the various devices performing various example operations is provided below.

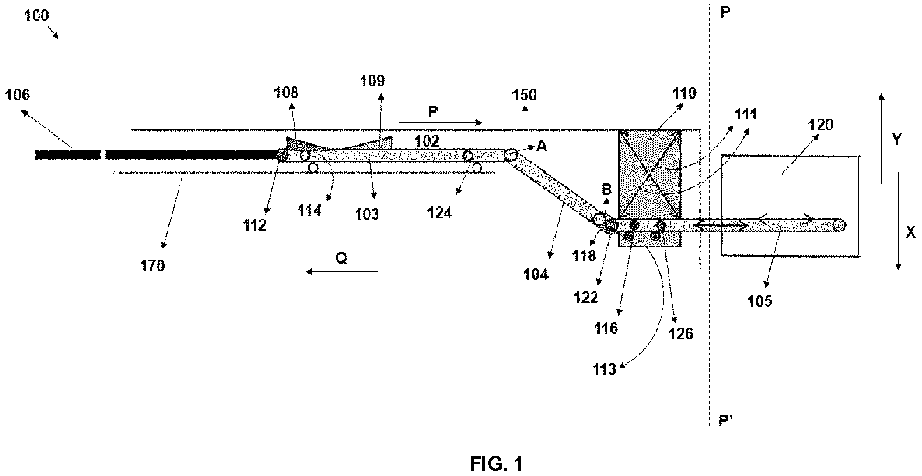

FIG. 1 schematically illustrates a first side-view 100 representing an item conveying apparatus 101 in a first state, in accordance with various example embodiments described herein. The first state herein represents an operational position of the item conveying apparatus 101. The item conveying apparatus 101 can include a conveyor 102 and other components supporting the conveyor 102. Along with the conveyor 102, the item conveying apparatus 101 includes one or more components that support an installation or mounting of the conveyor 102 with a ceiling of a material handling environment. The item conveying apparatus 101 includes along with the conveyor 102, a lift device that supports the conveyor 102.

The conveyor 102 includes a conveyor frame (not shown). Further, the conveyor 102 comprises a conveying surface defined by a plurality of conveyor segments. The conveyor 102 comprises a plurality of conveyor segments (e.g. a first conveyor segment 103, a second conveyor segment 104, and a third conveyor segment 105). The plurality of conveyor segments 103, 104, and 105 correspond to various segments or portions of the conveyor 102 that collectively define the conveying surface of the conveyor 102, hence segments on which the items can be conveyed. The conveyor frame of the conveyor 102 supports the plurality of conveyor segments 103, 104, and 105 of the conveyor 102. At least some portion of the plurality of conveyor segments 103, 104, and 105 is positioned within a portion defined by the conveyor frame. To this end, in an example, the plurality of conveyor segments 103, 104, and 105 can be mounted on a portion of the conveyor frame of the conveyor 102. Although three conveyor segments 103, 104, and 105 are illustrated in FIG. 1, however, the conveyor 102 comprises a plurality of conveyor segments, in accordance with various example embodiments described herein.

The plurality of conveyor segments 103, 104, and 105 are pivotably engaged relative to each other. In other words, each conveyor segment of the plurality of conveyor segments 103, 104, and/or 105 can be pivotably moved relative to remaining of the plurality of conveyor segments 103, 104, and/or 105. As illustrated in Fig. 1, the first conveyor segment 103 is pivotably engaged to the second conveyor segment 104 about a point A and the second conveyor segment 104 is pivotably engaged to the third conveyor segment 105 about a point B. Accordingly, the second conveyor segment 104 can be pivotably moved and positioned at an angle relative to any of the first conveyor segment 103 and/or the second conveyor segment 105.

According to an example embodiment, the conveyor frame of the conveyor 102 can be defined by two side rails. The two side rails may correspond to portions of conveyor frame which may run parallel to each other. In an example, the side rails of the conveyor frame can include one or more drive wheel assemblies engaged within a section of the conveyor frame. As stated earlier, the plurality of conveyor segments 103, 104, and 105 can define the conveying surface for an item and can be movable relative to the conveyor frame.

The item conveying apparatus 101 includes a lift device 110. The lift device 110 is suspended from a ceiling 150, for example, a ceiling of a material handling site. In an example, the lift device 110 can be an inverted scissor lift. Unlike conventional floor mounted conveyors, the conveyor 102 can be ceiling mounted, i.e. at least a portion of the conveyor 102 can be mounted on the ceiling 150. For instance, as illustrated, the conveyor 102 can be mounted on the ceiling 150 through the lift device 110 suspended from the ceiling 150. In this regard, in an example embodiment, at least a portion of the conveyor frame of the conveyor can be at least partially engaged a portion of the lift device 110.

The lift device 110 is configured to manipulate a positioning of the conveyor 102. The lift device 110 can manipulate a position of the conveyor 102 to lower a height at which the conveyor 102 is suspended from the ceiling 150 (or positioned relative to a ground surface). Further, the lift device 110 also is configured to manipulate a position of the conveyor 102 to raise a height at which the conveyor 102 is suspended from the ceiling 150 (or positioned relative to the ground surface). Illustratively, the lift device 110 can comprise at least two actuator elements 111 coupled to an actuation platform 113. The actuation platform 113 can be coupled to at least a portion of the conveyor 102. For example, as illustrated, the actuation platform 113 can be mechanically coupled to one or more of the plurality of conveyor segments 103, 104, and 105 of the conveyor 102. In an example embodiment, the at least two actuator elements 111 of the lift device 110 can be adapted to lower the actuation platform 113 in a direction X, e.g. towards a ground surface. Further, the at least two actuator elements 111 of the lift device 110 can be adapted to raise the actuation platform 113 in a direction Y, e.g. opposite to the direction X and towards the ceiling 150. In this regard, lowering the actuation platform 113 of the lift device 110 can lower a height of the conveyor 102 relative to a ground plane. Further, raising the actuation platform 113 can raise a height of the conveyor 102 relative to the ground plane. In some examples, height of the conveyor 102 can be raised or lowered so as to match a height of a platform e.g. of a transport carrier for loading or unloading items.

Fig. 1 illustrates, a first state, i.e. an operational position of the conveyor 102. In the operational position, the conveyor 102 can be extended towards a section through which one or more items are to be loaded or unloaded. In an example, conveyor 102 can be extended towards a section of a transport carrier. Extending the conveyor 102 as referred herein includes extending an end or a section, for example, one or more conveyor segments of the plurality of conveyor segments 103, 104, and 105 of the conveyor 102. As illustrated, the plurality of conveyor segments 103, 104, and 105 of the conveyor 102 can be extended outwards such that a portion of the conveyor segment 105 crosses beyond a plane PP'. Illustratively, for manipulating the position of the conveyor 102 to the operational position, the conveyor segments 104 and 105 can be extended out so as to interface with a carrier accumulation zone 120 (e.g. a section of a transport carrier). In an example, the carrier accumulation zone 120 may correspond to a platform of the transport carrier (e.g. a vehicle) carrying multiple items. In this regard, one or more conveyor segments of the conveyor 102 can be telescopically or non-telescopically extended outwards so as to interface a portion of the carrier accumulation zone 120 with a portion of the conveying surface of the conveyor 102. Upon such an interfacing, items can be moved from the conveyor 102 onto the carrier accumulation zone 120 or vice versa.

According to an example embodiment, the conveyor 102 can be a roller conveyor. The roller conveyor can comprise the conveying surface for the item defined by plurality of rollers. Further, the roller conveyor can be defined between two side rails of the conveyor frame where the rollers can be engaged between the two side rails and defines the conveying surface.

According to various example embodiments described herein, the item conveying apparatus 101 can comprise a plurality of drive wheels and/or support wheel assemblies. These assemblies can be positioned within side rails defined by the conveyor frame of the conveyor. The drive wheel and/or support wheel assemblies can be adapted to move one or more components of the conveyor 102. As illustrated in Figs 1-3, the item conveying apparatus 101 can include, conveyor drive wheel assemblies 112 and 122. The conveyor drive assemblies 112 and 122 can comprise one or more motor driven rollers and a corresponding conveyor belt that can be moved by the motor driven rollers. In this regard, conveyor drive assemblies 112 and 122 can be actuated by a control unit of the conveyor 102 to initiate movement of a conveyor belt to convey items.

Further, the conveyor 102 can include support wheel drive assemblies 114 and 124. The support wheel drive assemblies 114 and 124 can comprise one or more support wheels. The support wheels may be adapted to support at least one conveyor segment of the conveyor 102. As illustrated, the support wheels of the support wheel drive assemblies 114 and 124 can support the second conveyor segment 104 relative to a surface 170 of the item conveying apparatus 101. In other words, the support wheels of the support wheel assemblies 114 and 124 can provide support to the conveyor segments 103, 104, and/or 105 as these segments are moved forward (i.e. in direction P) or backward (i.e. in direction Q) for extending or retracting the conveyor 102, in a respective direction. The support wheels can be of any shape, form, structure or size depending on requirements of installation of the conveyor 102.

Furthermore, as illustrated in Figs 1-3, the conveyor 102 can include frictional driving wheel assemblies 116 and 126. The frictional drive wheel assemblies 116 and 126 can comprise frictional wheels or sprockets. In an example, the frictional wheels can correspond to wheels covered with a material of high frictional coefficient. For example, the frictional wheels may include wheels covered with rubber caps. In this case, frictional drive wheel assemblies 116 and 126 may also include two pressure wheels opposing to the frictional wheels. In an example, the frictional drive wheel assemblies 116 and 126 may move within sideguards engaged on side rails of a conveyor frame of the conveyor 102. In an example, use of the friction wheels of the frictional drive wheel assemblies 116 and 126 can facilitate controlled movement of one or more of the plurality of conveyor segments 103, 104, and 105 of the conveyor 102. In another example embodiment, the frictional driving wheel assemblies 116 and 126 may include a tooth belt and pulley-based arrangement for driving one or more of the telescopic segments 103, 104, and 105 of the conveyor 102.

In accordance with some example embodiments described herein, wheels of the wheel assemblies described herein may be mounted within side rails at both sides of the conveyor frame. In this aspect, the wheels may be fitted, in such a manner, that the plurality of conveyor segments 103, 104, and 105 of the item conveying apparatus 101 can be moved, i.e. retracted or extended relative to the conveyor frame based on rolling of the wheels within the side rails in a longitudinal direction of the conveyor frame. In some example embodiments, the item conveying apparatus 101 may further comprise a motor which can drive at least one of the plurality of wheels by means of a gear both in the forward and in the backward direction to facilitate extension or retraction of one or more of the conveyor segments 103, 104, 105 of the conveyor 102.

In some example embodiments, the conveyor 102 of the item conveying apparatus 101 may be positioned aside with a feed conveyor (e.g. an infeed conveyor and/or an outfeed conveyor) referred hereinafter, as a source conveyor 106. The source conveyor 106 may operate as an infeed conveyor (i.e. a conveyor that facilitates infeed of items) or an outfeed conveyor (i.e. a conveyor that facilitates outfeed of items) depending on items being conveyed into a section or area of the material handling environment or out from the material handling environment. For example, the source conveyor 102 can operate as an infeed conveyor in situations where one or more items are to be unloaded from a transport carrier and an inflow of the one or more items can be moved into a storage area or section of the material handling environment. Similarly, the source conveyor 102 can operate as an outfeed conveyor in situations where one or more items are to be moved out from a storage location or section of the material handling environment, for instance, for loading the items onto the transport carrier for transit.

Illustratively, the conveyor 102 can be installed aside of the source conveyor 106. As illustrated, the conveyor 102 may include a first side deflector 108 and the source conveyor 106 may include a second side deflector 109. The first side deflector 108 and the second side deflector 109 can be of any shape, size, or structure. For example, the first side deflector 108 and the second side deflector 109 can correspond to an extension or extended portion of conveyor frame itself or a triangular bar, and/or the like, that may enable deflection of an incoming or outgoing item. In an example, the first side deflector 108 and the second side deflector 109 may be actuated by a control unit (not shown) of the conveyor 102, to facilitate a deflection of the items. In this regard, the first side deflector 108 and/or the second side deflector 109 may be adapted to deflect an incoming item i.e. item incoming from the source conveyor 106 onto the conveyor 106 or alternatively, items incoming on the source conveyor 106 from the conveyor 102.

In an example embodiment, for infeed, i.e. unloading items from the transport carrier, the item conveying apparatus 101 including the conveyor 102 can be installed above the source conveyor 106. In an example, at least a portion of the conveyor 102 may extend so as to define a segment forming an inclined path or a slide that may facilitate dropping of the items moving on the conveyor 102 in a waterfall fashion on to the source conveyor 106. In this aspect, as the items waterfalls from the conveyor 102 onto the source conveyor 106, the items can be moved on the source conveyor 106 towards a storage area or a section (e.g. a container accumulation zone) inside the material handling environment.

In another example embodiment, for out-feed, i.e. for loading items into the transport carrier, the item conveying apparatus 101 including the conveyor 102 can be installed below the source conveyor 106. In an example, at least a portion of the source conveyor 106 may extend so as to define a segment forming an inclined path or a slide which facilitates dropping of the items moving on the source conveyor 106 on to the conveyor 102 in a waterfall fashion. In this aspect, as the items waterfalls from the source conveyor 106 on to the conveyor 102, the items are moved on extended conveyor segments 103, 104, and 105 and further inside the transport carrier. In an example, an end of the conveyor 102 may be accessible to an operator to take down incoming items from the conveyor 102 and to move it into the carrier accumulation zone 120 of the transport carrier.

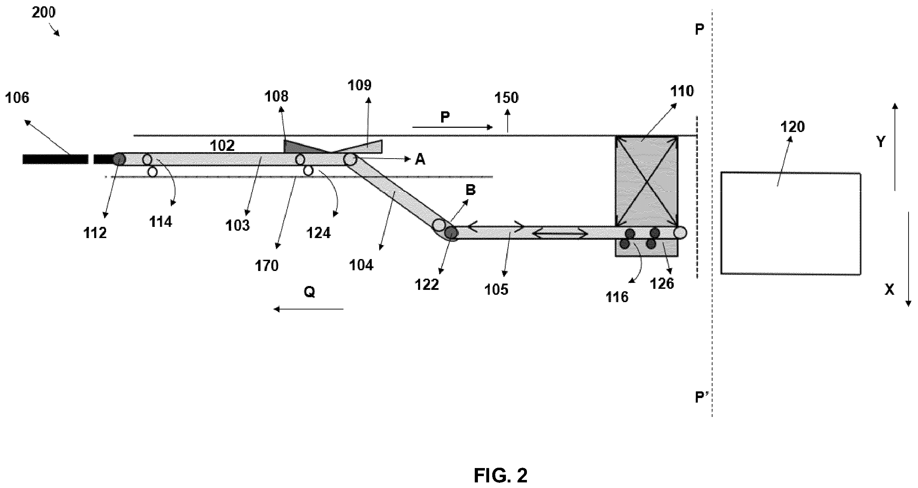

FIG. 2 schematically illustrates a second side-view 200 representing the item conveying apparatus 101 in a second state, in accordance with various example embodiments described herein. The second state of the item conveying apparatus 101, as illustrated in Fig. 2, represents a retracted position of the conveyor 102. In the retracted position, the plurality of conveyor segments 103, 104, and 105 of the conveyor 102 can be at least partially retracted or pulled back. In an example, in the retracted position, at least one conveyor segment of the plurality of conveyor segments 103, 104, and 105 can be at least partially retracted within a portion of the conveyor frame. For instance, compared to position of the third conveyor segment 105 illustrated in Fig. 1, in the retracted position, the third conveyor segment 105 is positioned before the plane PP'. In other words, the retracted position of the conveyor 102 represents a state in which the one or more conveyor segments of the plurality of conveyor segments 103, 104, and/or 105 of the conveyor 102 may be pulled back in the direction Q.

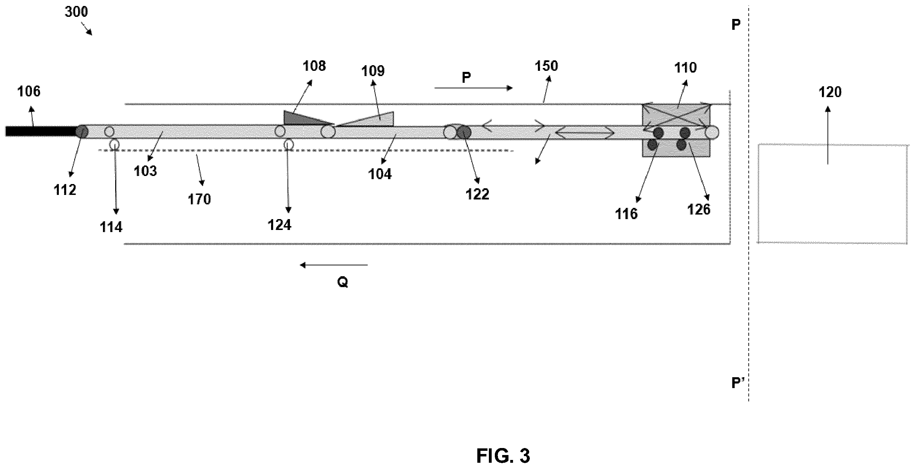

Accordingly, by moving one or more of the plurality of conveyor segments 103, 104, and/or 105, the conveyor 102 can be extended to an operational position, i.e. the first state (as illustrated in Fig. 1) or can be retracted back into the retracted position, i.e. the second state (as illustrated in Fig. 2). Further, the conveyor 102 can further be retracted more into a parking position, details of which are described in reference to Fig. 3

FIG. 3 schematically illustrates a third side-view 300 representing the item conveying apparatus 101 in a third state, in accordance with various example embodiments described herein. The third state of the item conveying apparatus 101 represents a parking position of the conveyor 102. In an example, the conveyor 102 can be moved to the parking position in response to completion of a movement of items on the conveyor 102 i.e. when no conveyance operation is being performed by the conveyor 102. In other words, when the conveyor 102 is in the parking position, no movement of items on the conveyor 102 can be performed. While in the operational and retracted positions of the conveyor 102 (as illustrated in Figs 1 and 2 respectively), the conveyor 102 is lowered down (i.e. in the direction X), in the parking position (as illustrated in Fig. 3) the conveyor 102 can be raised up (i.e. in the direction Y). In this regard, as illustrated in Fig, 3, the actuation platform 112 of the lift device 110 can be raised up in the direction Y, thereby, raising the conveyor 102 to a parking height. In an example, the parking position may correspond to a standby position and the parking height corresponds to a height at which the conveyor 102 may be positioned when no further operation of the conveyor 102 is desired. Said differently, in the operational or retracted position of the conveyor 102, the conveyor 102 can be lowered down by the lift device 110 so as to interface with a platform which may receive or transfer items through the conveyor 102. However, in the parking position, the conveyor 102 is raised back up closer towards the ceiling.

Further, in the parking position, the plurality of conveyor segments 103, 104, and/or 105 of the conveyor 102 are at least partially retracted or pulled back in the direction Q. In this regard, in an example where the conveyor 102 corresponds to a telescopic conveyor, in the parking position, the third conveyor segment 105 and the second conveyor segment 104 can be telescopically pulled within a portion of the conveyor frame of the conveyor 102. Furthermore, in the parking position, each conveyor segment of the plurality of conveyor segments of the conveyor 102 can be positioned in a substantially colinear manner relative to another. In other words, while in the first state or the second state of the conveyor 102, the conveyor segment 104 is positioned at an angle relative to the conveyor segments 103 and 105 (e.g. forming a Z shape bend), in the parking position, the plurality of conveyor segments 103, 104, and 105 can be positioned relatively in a straight-line formation.

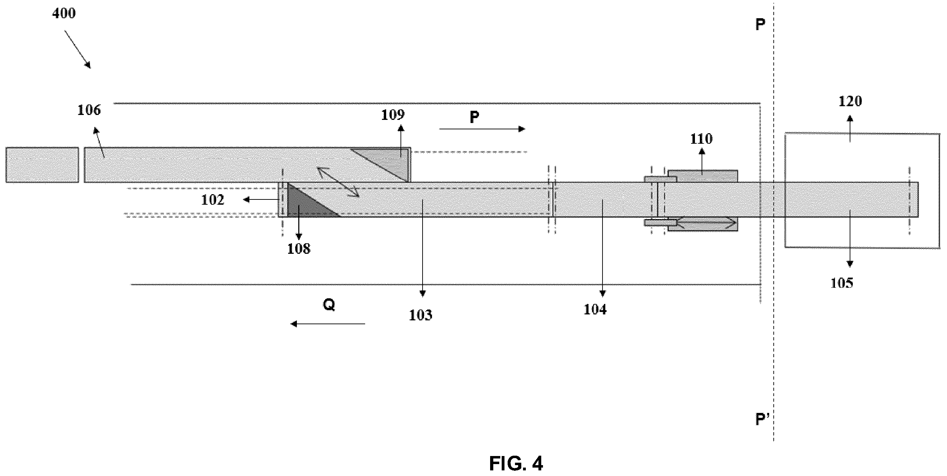

FIG. 4 schematically illustrates a first top view 400 of the item conveying apparatus 101, in accordance with some example embodiments described herein. The first top view 400 illustrates a top view of the item conveying apparatus 101 including the conveyor 102 in the first state, i.e. the operational state, as described earlier in reference to FIG. 1. Illustratively, the conveyor 102 is positioned aside a feed conveyor, i.e. the source conveyor 106. Further, the first side deflector 108 and the second side deflector 109 are positioned on the conveyor 102 and the source conveyor 106 to deflect incoming items from one conveyor to the other, in a manner, as described earlier.

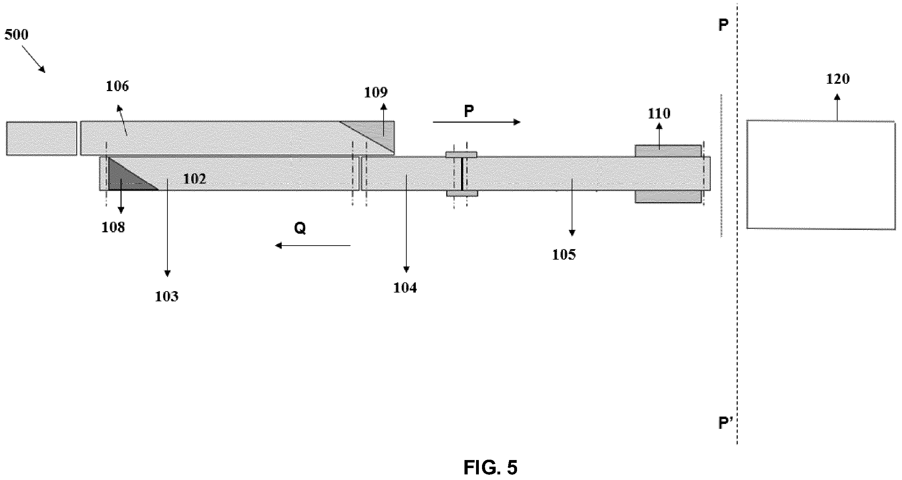

FIG. 5 schematically illustrates a second top view 500 of the item conveying apparatus 101, in accordance with some example embodiments described herein. The second top view 500 illustrates a top view of the item conveying apparatus 101 including the conveyor 102 in the second state, i.e. the retracted position, as described earlier in reference to FIG. 2. As illustrated, in the retracted position, one or more conveyor segments of the conveyor 102 can be pulled back at least partially in the direction Q. In this regard, as described earlier, in the retracted position, the third conveyor segment 105 can be pulled back and positioned before the plane PP'.

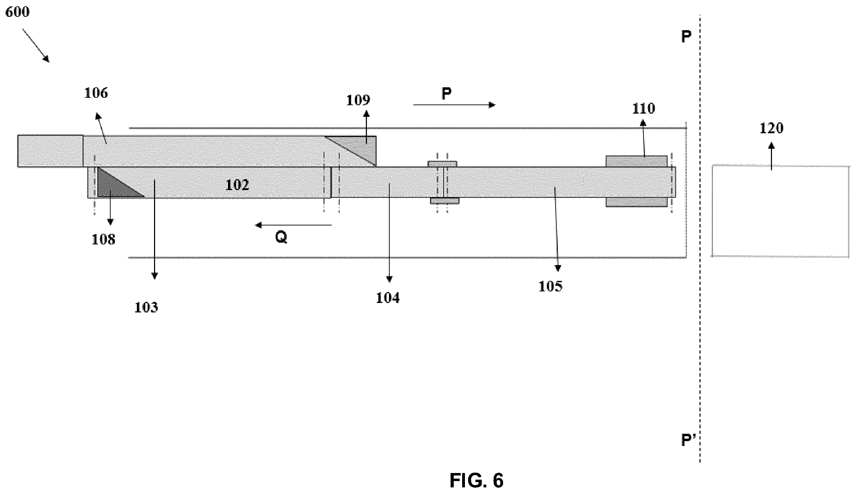

FIG. 6 schematically illustrates a third top view 600 of the item conveying apparatus 101, in accordance with some example embodiments described herein. The third top view 600 illustrates, the item conveying apparatus 101 in the parking position, as described earlier in reference to FIG. 3.

As stated earlier, in accordance with various example embodiments described herein, the item conveying apparatus 101 can include the control unit. The control unit may, for example, comprise at least one processor and at least one memory. In an example, the processor can be configured to carry out programs which are stored in the memory and thereby to cause the item conveying apparatus 101 to carry out desired actions. For example, in some example embodiments, a control panel of the control unit may be positioned at a free end of the item conveying apparatus 101 and may be accessible to an operator. In this regard, the control panel may include one or more controls that can allow an operator to control various functions of the item conveying apparatus 101. For instance, in an example, such controls may be used by the operator for controlling an extension of one or more of the plurality of conveyor segments 103, 104, and 105 of the conveyor 102 of the item conveying apparatus 101. In another example, such controls may be used for providing a direction of conveying operation (loading or unloading) or stopping/starting execution of an operation by the conveyor 102. In some example embodiments, these controls may include physical buttons which can be actuated by upon pressing by the operator. In some example embodiments, these controls may be defined within a graphical user interface as actuatable icons, displayed on a screen of the graphical user interface, or may include soft touch keys which can be used by the operator for actuation of different units of the item conveying apparatus 101 to carry out desired operations. In some example embodiments, the control panel of the item conveying apparatus 101 may also control an operation of height adjustment of the item conveying apparatus 101.

In some example embodiments, the control unit may be communicatively coupled to one or more components of the conveyor 102, for example, motors, sensors, etc. In some example embodiments, the control unit could also be connected to a radio receiver or a radio-based transmission/receiving device of another control unit within a material handling environment for a wireless communication with the control unit.

In some example embodiments, the item conveying apparatus 101 may also include a platform (not shown herein) that may extend from one end of the conveyor 102. For instance, in an example, the item conveying apparatus 101 may include the platform extending from an end of the third conveyor segment 105. In some examples, while operating the item conveying apparatus 101, the operator may stand on the platform to perform one or more operations e.g. loading or unloading of items on the conveyor 102. In this regard, in an example, the platform may be positioned at a correct height by raising up or lowering down one or more conveyor segments 103, 104, and 105 of the item conveying apparatus 101. The operator may then perform operations for example but not limited to, picking up the items from the conveyor 102 and placing it within a zone e.g. the carrier accumulation zone 120 of the transport carrier and vice versa.

The item conveying apparatus 101 may have a light weight design. In this aspect, the roller conveyor 102 and associated equipment of the item conveying apparatus 101 may be made of pre-stressed aluminum-based sheets which are supported by side guides which encapsulates the item conveying apparatus 101 to prevent any bending or undesired inclination of the item conveying apparatus 101.

The item conveying apparatus 101 may also comprise various operating elements and sensors. In some examples, these operating elements may allow the operators inter alia to bring about a movement of the item conveying apparatus 101 into any of the parking position, the retracted position 100, or into the operating position, as described earlier in reference to Figs 1-3. In some examples, the control panel of the control unit, may also allow an operator to bring about a start, a stoppage, an emergency stop to an operation of the item conveying apparatus 101 or an emergency stop of movement of one or more of the conveyor segments 103, 104, or 105 of the conveyor 102. In some examples, a sensor may be provided to register that the conveyor 102 is moved to one of, the retracted position, or the parking position, and/or the operating position.

By way of ceiling mounted installation of the item conveying apparatus 101, the conveyor 102 can be positioned off from a ground surface i.e. with some portion of the ceiling, thereby, reducing a footprint and saving a lot of space occupancy of the material handling environment. Further, it also supports controlling and adjusting a height of the conveyor 102 relative to a platform of the transport carrier 120.

In an example embodiment, the lift device 110 of the item conveying apparatus 101 may correspond to an inverted scissor lift that may include at least two actuator elements positioned in a crisscrossed fashion and an actuation platform that may be mechanically engaged to at least a portion of the conveyor 102. In this regard, the actuator elements may be adapted to: move down the actuation platform so as to lower a height of the conveyor 102 relative to a ground plane. Further, the actuator elements may also be adapted to move up the actuation platform raise the conveyor 102 to a defined height relative to the ground plane.

In accordance with some example embodiments, the control unit of the item conveying apparatus 101 may also control operations of the lift device 110 for controlling upward or downward movement of the conveyor 102.

The item conveying apparatus 101 may also include an interlocking unit 118, for example, a solenoid based powered metal segment, that can support interlocking of the conveyor wheel drive assembly with the support wheel drive assembly of the conveyor 102, thereby blocking a relative movement between two conveyor segments. For example, the interlocking unit 118 may support interlocking of the second conveyor segment 104 with the third conveyor segment 105. As the conveyor 102 is moved into the operational position 100, the second conveyor segment 104 and the third conveyor segment 105 can extend so as to facilitate transport of an item from the carrier accumulation zone 120 on the conveyor 102 and vice versa. In this regard, as the second conveyor segment 104 extends and gets inclined with respect to the conveyor segments 103 and 105, in some examples, the interlocking unit 118 can interlock and block a relative movement between the conveyor segments 104 and 105. In other words, interlocking by the interlocking unit 118, can create a stiff formation between the two conveyor segments i.e. the second conveyor segment 104 and the third conveyor segment 105 (i.e. as of being a single unit), thereby, preventing any relative movement. Further, based on the interlocking, if a further movement of the conveyor 102 i.e. in the direction P or the direction Q is attempted by the lift device 110, each conveyor segment interlocked by the interlocking unit 118 can move together as a single unit. Furthermore, in an example embodiment, the interlocking unit 118 may additionally compensate for any torque which may be generated by, for example, a movement of the third conveyor segment 105 in forward direction (i.e. the direction P) or backward direction (i.e. the direction Q) and/or due to load of the item moving on the conveyor 102 of the item conveying apparatus 101.

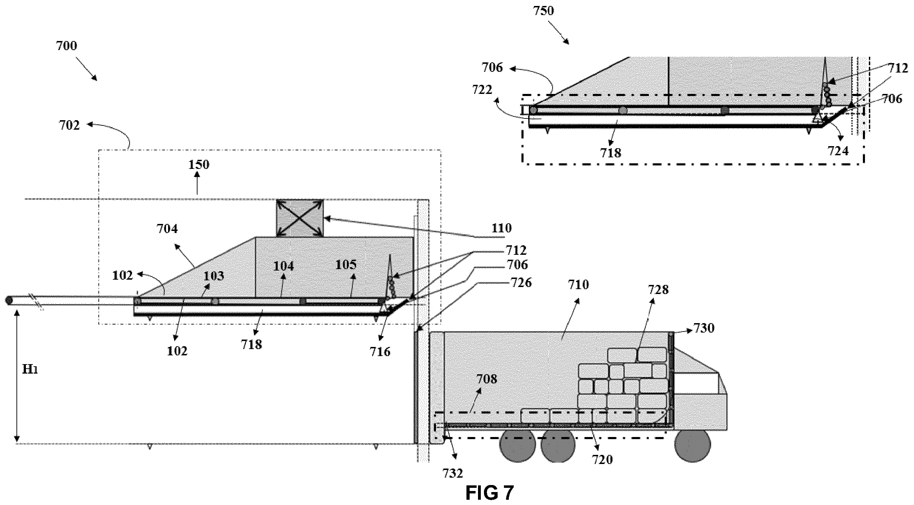

In an example, the item conveying apparatus 101 may be installed in a configuration so as to facilitate automated loading and/or unloading of items (for example, without any manual intervention) from the conveyor 102 to the item accumulation zone 120 of the transport carrier and vice versa, details of which are described hereinafter in reference to FIGS. 7-10.

FIG. 7 schematically illustrates a first view of such an example of such implementation of the item conveying apparatus 101. Illustratively, in an example embodiment, the item conveying apparatus 101 may include an item handling unit 702. In one example embodiment, the item handling unit 702 may include one or more components that may be mechanically coupled to the conveyor 102. In another example embodiment, the conveyor 102 may be a part of item handling unit 702 itself. In this regard, the item handling unit 702 can include including at least the conveyor 102 and the lift device 110 that may be installed in such a configuration that can facilitate automated loading and/or unloading of items through the conveyor 102, i.e. a ceiling mounted conveyor.

According to an example embodiment, the item handling unit 702 may include an item transfer section 704 and a sectional floor unit 706. The item transfer section 704 may correspond to a section or an enclosure that may be adapted to transfer or receive one or more items. In an example, the item transfer section 704 may receive from the transport carrier, an item or a pack of items (i.e. multiple items stacked or piled up in any manner). In an example embodiment, the item transfer section 704 may be suspended from the ceiling 150 of the material handling environment. In this regard, the item transfer section 704 may be suspended from the ceiling through the lift device 110. In an example, the lift device 110 can correspond to the inverted scissor lift, as described in earlier in reference to FIGS 1-6. In an example embodiment, at least a portion, for example, the actuation platform 113 of the lift device 110 can be mechanically engaged to a portion of the item transfer section 704. In this regard, actuating the actuator elements 111 of the lift device 110 to raise up or lower down the lift device 110 may cause raising up or lowering down of the item transfer section 704. Further, the conveyor 102 may be coupled to at least some portion of the item transfer unit 704, for instance, based on any mechanical engagement.

According to an example embodiment, the item handling unit 702 may also comprise a sectional floor unit 706. The sectional floor unit 706 may correspond to a floor section that may be coupled to the item transfer section 704. In an example, the sectional floor unit 706 may comprise components that may mechanically interface with a platform of a transport carrier or an item carrying unit. For instance, in an example, the sectional floor unit 706 may be configured to interface with an item carriage section 708 of a vehicle 710 (e.g. a transport carrier). According to an example embodiment, the sectional floor unit 706 of the item handling unit 702 can comprise a transfer flap 712 and a sectional floor garage 718, details of which are described in following paragraphs.

As illustrated, the transfer flap 712 can be coupled to an end 716 (e.g. a distal end) of the conveyor 102. The transfer flap 712 can be adapted to pivotably move about a point from a raised-up position to a lowered down position. Here, the end 716 of the conveyor 102 can correspond to a portion that may be interfaced with a portion of the item carriage section 708 of the vehicle 710. Said that, in an example, the transfer flap 712 may be initially in a raised-up position and can be moved to the lowered down position (e.g. rotatably moved 90 degrees), in a situation, when it may be required to interface the end 716 of the conveyor 102 with the item carriage section 708 of the vehicle 710. In other words, the transfer flap 712 may be lowered down to cause interfacing of the sectional floor unit 706 with the item carriage section 708 of the vehicle 710.

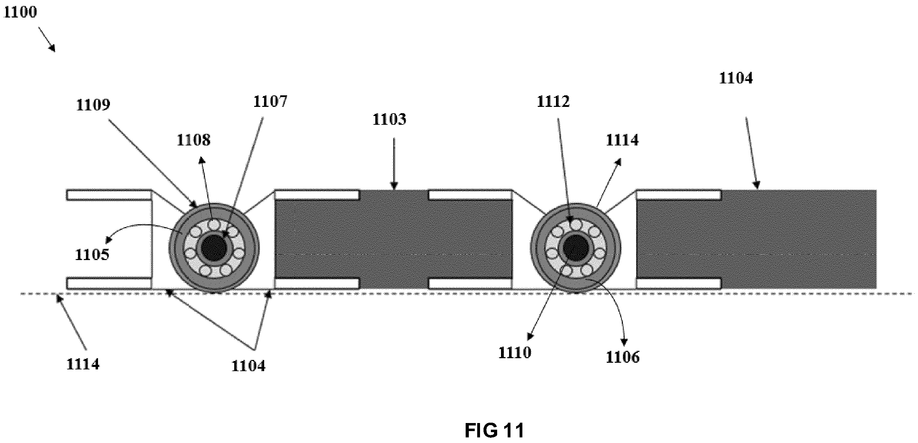

Illustratively, the sectional floor unit 706 may also include a sectional floor garage 718. The sectional floor garage 718 may correspond to a section that may be defined beneath the conveyor 102. In an example, the sectional floor garage 718 may correspond to an enclosure (like a channel) that can be configured to receive a sectional floor surface 720 of the vehicle 710. The sectional floor surface 720 of the vehicle 710 may be like a floating floor surface, i.e. a surface that can be adapted to slidably move within a portion defined by the item carriage section 708 using one or more drive cables. In this regard, the sectional floor surface 720 may be defined based on an arrangement of multiple sectional floor plates and drive wheel assemblies, further details of which are described in reference to FIG. 11.

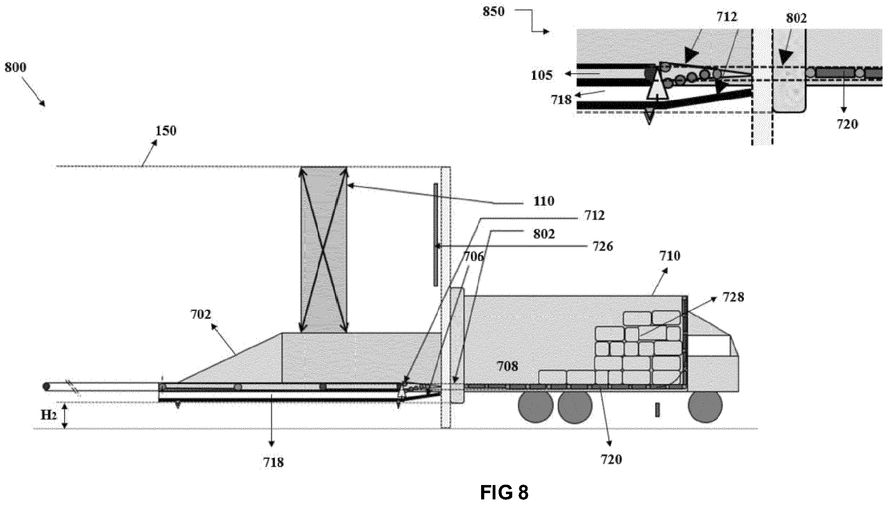

FIG. 7 also illustrates a close-up (i.e. zoomed-in) view of the sectional floor unit 706. Illustratively, the sectional floor garage 718 is defined between a first end 722 and a second end 724 beneath the conveyor 102. Details of the sectional floor surface 720 and its receiving in the sectional floor garage 718 are described later in reference to FIGS. 8-10.

FIG. 7 schematically illustrates a first operating state 700 of the item handling unit 702. In the first operating state 700, the item transfer section 704 along with the conveyor 102 is in a raised-up position. In the raised-up position the conveyor 102 may be at a positioned at a first height H₁ relative to a ground surface. Further, the vehicle 710 including a stack of items 728 is positioned close to a loading gate 726 of the material handling environment. The stack of items 728 can correspond to any of shipments, containers, articles, etc., as described earlier. Moving to FIG. 8, a second operating state 800 of the item handling unit 702 is illustrated. In the second operating state 800, the item transfer section 704 of the item handling unit 702 can be moved to a lowered down position. In the lowered-down position, the conveyor 102 may be positioned at a second height H₂ (i.e. a height < the first height H₁) relative to the ground surface. In this regard, the conveyor 102 along with the item handling unit 702 can be lowered down by actuation of the actuator elements 111 of the lift device 110, in a similar manner, as described earlier. Further, in the second operating state 800, as illustrated in FIG. 8, the loading gate 726 of the material handling environment can be raised up (i.e. opened up for loading and/or unloading the items). Furthermore, in the second operating state 800, the sectional floor unit 706 can be interfaced with the item carriage section 708 of the vehicle 710.

Interfacing the sectional floor unit 706 with the item carriage section 708 may involve for example, (a) positioning the item handling unit 702 at a desired height such that the conveying surface of the conveyor 102 and the sectional floor surface 720 of the item carriage section 708 may be at a similar height relative to the ground surface, (b) lowering down of the transfer flap 712 so as to bridge the conveying surface with the sectional floor surface 720 of the vehicle 710, and (c) connecting the conveying surface of the conveyor 102 and the sectional floor surface 720 of the item carriage section 708 with one or more drive cables 802. FIG. 8 also illustrates a close-up (i.e. zoomed-in) view 850 of the interfacing of the sectional floor unit 706 including the conveyor surface of the conveyor 102 with the sectional floor surface 720 of the item carriage section 708 of the vehicle 710.

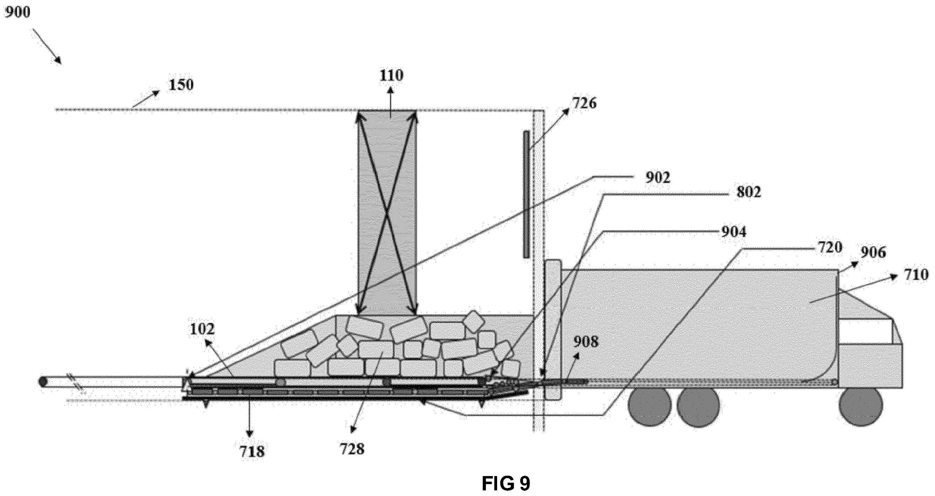

In an example embodiment, the sectional floor unit 706 of the item handling unit 702 can be coupled to the item carriage section 708 of the vehicle 710 based on an interfacing of the transfer flap 712 with the portion of the item carriage section 708 and a connection of a first drive cable of the sectional floor unit 706 to a second drive cable of the item carriage section 708. In this regard, in an example embodiment, at least one of the first drive cable and the second drive cable can be configured to slidably pull the sectional floor surface 720 of the vehicle 710 into the sectional floor garage 718, details of which are illustrated in FIG. 9.

FIG. 9 schematically illustrates a third operating state 900 of the item handling unit 702 of the item conveying apparatus 101, in accordance with some example embodiments described herein. In the third operating state 900, the stack of items 728 may be unloaded from the item carriage section 708 of the vehicle 710 onto the conveyor 102. Illustratively, the stack of items 728 unloaded from the vehicle 710 can be received in an enclosure defined by the item transfer section 704. In this regard, the stack of the items 728 can be received over the conveying surface of the conveyor 102. For unloading the stack of items 728, as illustrated, the sectional floor surface 720 of the item carriage section 708 may be pulled or moved into the sectional floor garage 718. To this end, in an example, the drive cables 802 may be configured to slidably pull the sectional floor surface 720 into the sectional floor garage 718 beneath the conveyor 102 of the item handling unit 702. In an example, the sectional floor unit 706 may include a mover element 902 that may be moved to multiple positions e.g. a stand-by position, an engaged position, or into an unloading position for interfacing and pulling the sectional floor surface 720 of the vehicle 710. In an example, a member 904 (e.g. a metal sheet or an interfacing plate) may be positioned at interfacing junction of the conveyor 102 and the sectional floor surface 720 such that, as the sectional floor surface 720 is slidably pulled into the sectional floor garage 718, the stack of items 728 are moved onto the conveying surface of the conveyor 102.

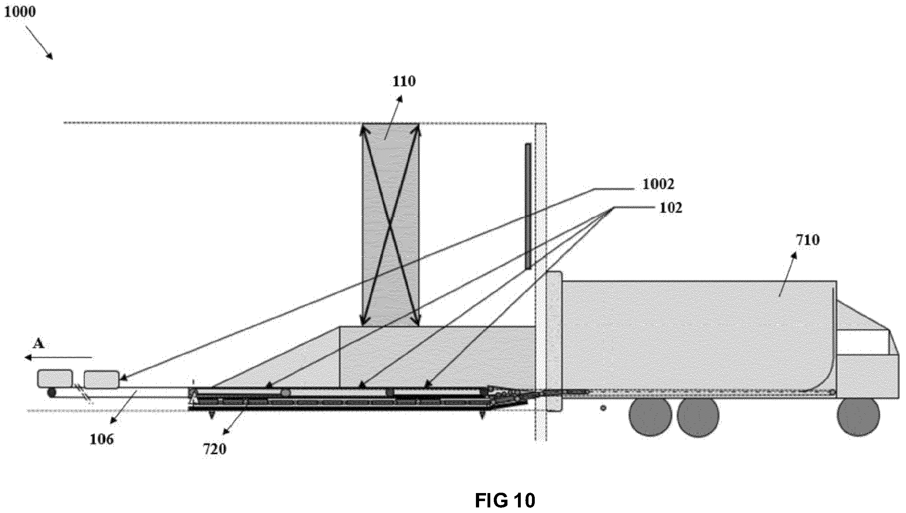

FIG. 10 schematically illustrates a fourth operating state 100 of the item handling unit 702 of the item conveying apparatus 101, in accordance with some example embodiments described herein. In the fourth operating state 1000, one or more items 1002 from the stack of items 728 may be conveyed onto the source conveyor 106 by the conveyor 102. For instance, as the stack of items 728 is unloaded on the conveyor 102 from the vehicle 710, one or more items from the stack of items 728 can be further conveyed onto the source conveyor 106 and further transported by the source conveyor 106 into a section (e.g. a singulation section) of the material handling environment. Thereafter, the items from the stack of items 728 may be singulated (i.e. separated) and further sorted and moved into respective storage locations. FIG. 10, illustrates the one or more items 1002 may be conveyed in a direction A by the source conveyor 106 into a source location (e.g. a storage location or a singulation section) of the material handling environment.

Further, in an example embodiment, upon unloading the stack of items 728 onto the conveyor 102, the sectional floor surface 720 can be pulled back into the portion of the item carriage section 708 of the vehicle 710. Furthermore, the loading gate 726 can be lowered down and the item handling unit 702 can be raised up into the first operating state 700, as described in FIG. 7.

FIGS. 7-10 illustrates an example implementation of the item conveying apparatus 101 having the item handling unit 702 where the conveyor 102 can be used for unloading the stack of items 728 from the vehicle 710. Alternatively, and/or additionally, in another example embodiment, an installation of the item conveying apparatus 101, as illustrated in FIGS. 7-10 can also be used for loading of one or more items (e.g. either individually or in stacked form) from the conveyor 102 onto the item carriage section 708 of the vehicle 710.

FIG. 11 schematically illustrates a side view 1100 of a portion the sectional floor surface 720 of the vehicle 210, in accordance with some example embodiments described herein. As described earlier, the sectional floor surface 720 of the vehicle 710 can be defined as a floating floor surface (i.e. a surface that can be adapted to slidably move within a portion defined by the item carriage section 708) using one or more drive cables. The portion referred herein may correspond to a channel like structure defined between a first end 906 and a second end 908 of the item carriage section 708 of the vehicle 710, as illustrated in FIG. 9. Illustratively, the sectional floor surface 720 can be defined based on a plurality of sectional floor plates (e.g. a first sectional floor plate 1103 and a second sectional floor plate 1104) that can be mechanically engaged (e.g. encased) between flanges 1104 and drive assemblies (e.g. a first drive assembly 1105 and a second drive assembly 1106). In an example, the flanges 1104 illustrated herein, can correspond to injection molded compact flanged connection (CFC). In an example, the sectional floor surface 720 may be positioned over a surface 1114 e.g. a surface of the item carriage section 708. The drive assemblies may include drive wheels or sprockets, shafts, ball bearings, and drive pulleys. For instance, as illustrated, the first drive assembly 1105 may include a first shaft 1107, first ball bearings 1108, and a first pulley 1109 and the second drive assembly 1106 may include a second shaft 1110, second ball bearings 1112, and a second pulley 1114. Such an arrangement facilitates slidable movement of the sectional floor surface 720 along a portion of the item carriage section 708 of the vehicle 710 and further into the sectional floor garage 718 of the item handling unit 702.

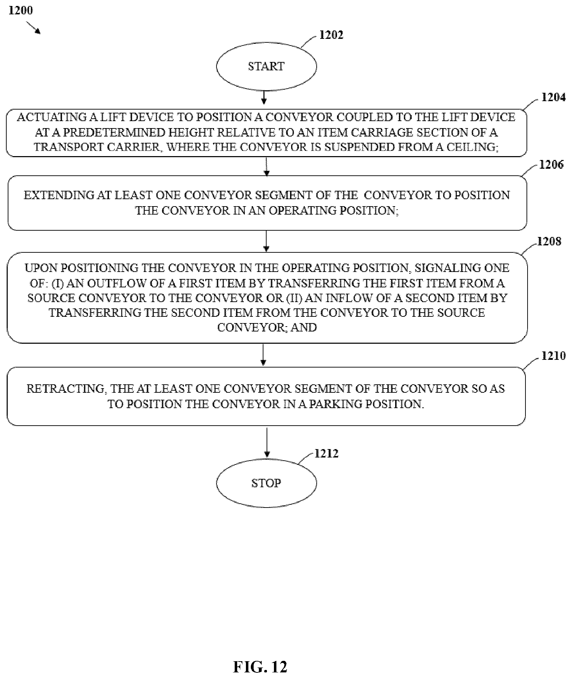

FIG. 12 schematically illustrates an example flowchart 1200 depicting operations performed by the item conveying apparatus 101, in accordance with some example embodiments described herein.

It will be understood that each block of the flowcharts, and combinations of blocks in the flowcharts, may be implemented by various means, such as hardware, firmware, one or more processors, circuitry and/or other devices associated with execution of software including one or more computer program instructions. For example, one or more of the procedures described above may be embodied by computer program instructions. In this regard, the computer program instructions which embody the procedures described above may be stored by a memory of an apparatus employing an embodiment of the present invention and executed by a processor in the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of Figure 12 when executed, convert a computer or processing circuitry into a particular machine configured to perform an example embodiment of the present invention. Accordingly, the operations of Figure 12 define an algorithm for configuring a computer or processor, to perform an example embodiment. In some cases, a general-purpose computer may be provided with an instance of the processor which performs the algorithm of Figure 12 to transform the general-purpose computer into a particular machine configured to perform an example embodiment.

Accordingly, blocks of the flowchart support combinations of means for performing the specified functions and combinations of operations for performing the specified functions. It will also be understood that one or more blocks of the flowcharts, and combinations of blocks in the flowchart, can be implemented by special purpose hardware-based computer systems which perform the specified functions, or combinations of special purpose hardware and computer instructions.

The method 1200 can start at step 1202. At step 1204, the item conveying apparatus 101 can include means, such as the control unit for actuating, the lift device 110 to position the conveyor 102 coupled to the lift device 110 at a pre-determined height relative to the item carriage section 708 of the transport carrier (i.e. the vehicle 710). As described earlier in reference to FIGS. 1-10, the conveyor 102 is ceiling mounted, i.e. suspended from the ceiling 150 through the lift device 110. In an example, the height may be predetermined based on various factors, e.g. but not limited to, (a) a type of the vehicle 710 (i.e. based on a height of a platform of the transport carrier carrying one or more items), (b) a height of the ceiling 150 of the material handling environment, (c) floor plan or architecture of the material handling site etc. The conveyor 102 can be positioned at the predetermined height based on actuation of the actuator elements 111 of the lift device 110, in a similar manner, as described earlier in reference to FIGS. 1-10. In an example, the conveyor 102 can be positioned at the height H₂, as illustrated in FIG. 8, so as to interface the conveying surface of the conveyor 102 with the sectional floor surface 720 of the vehicle 710. In an example, the conveyor 102 can be positioned at the pre-determined height upon arrival of the transport carrier. i.e. the vehicle 710 at a defined location, i.e. an unloading/loading section of the material handling site.

Moving to step 1206 the item conveying apparatus 101 may include means, such as the control unit for extending at least one conveyor segment (e.g. from amongst the plurality of conveyor segments 103, 104, and 105) of the conveyor 102 to position the conveyor 102 in the operating position. The operating position referred herein, corresponds to the first state of the item conveying apparatus 101, as described earlier in reference to FIG. 1.

Upon positioning the conveyor 102 in the operating position, at step 1208, the item conveying apparatus 101 may include means, such as the control unit for signaling an inflow or outflow of one or more items through the conveyor 102. In this regard, in an example, the control unit may signal an outflow of a first item by transferring the first item from the source conveyor 106 to the conveyor 102. In an example, the first item may be further transported into the item carriage section 708 of the vehicle 710. Further, in another example, the control unit may signal an inflow of a second item by transferring the second item from the conveyor 102 to the source conveyor 106. In this regard, in an example, the second item may be received on the conveyor 102 from the vehicle 710 and can be transported to a storage location of the material handling environment by the source conveyor 106.

Moving to step 1210, the item conveying apparatus 101 may include means, such as the control unit to cause retracting of the at least one conveyor segment (e.g. from amongst the plurality of conveyor segments 103, 104, and 105) of the conveyor 102. In an example, the at least one conveyor segment may be retracted or pulled back so as to position the conveyor 102 in the parking position, in a similar manner, as described earlier in reference to FIGS. 3 and 6. In another example, the at least one conveyor segment may be retracted or pulled back so as to position the conveyor 102 in the retracted position, as described earlier in reference to FIGS. 2 and 5. The method 1200 stops at step 1212.

In an example embodiment, upon positioning the conveyor 102 at the pre-determined height, the method 1200 may also include interfacing the sectional floor unit 706 of the item handling unit 702 with the item carriage section 708 of the vehicle 710 i.e. the transport carrier. Interfacing of the sectional floor unit 706 with the item carriage section 708 of the vehicle 710 may be performed to initiate automated loading and/or unloading of items from the conveyor 102 to the vehicle 710 and vice versa, in a similar manner, as described earlier in reference to FIGS. 7-10. Further, the method 1200 may also include receiving the sectional floor surface 720 of the item carriage section 708 of the transport carrier into the sectional floor garage 718 defined beneath the conveyor 102. In this regard, the sectional floor surface 720 may be moved into the sectional floor garage 718 to unload the stack of items 728 from the vehicle 710 onto the conveyor 102 of the item handling unit 702, as described earlier in reference to FIGS 7-10.

In accordance with some example embodiments described herein, the ceiling-based installation of the item conveying apparatus 101 may include two individual belt conveyors, i.e. the conveyor 102 and a feed conveyor (i.e. the source conveyor 106) that can be installed side by side to each other. In some examples, the conveyor 102 can correspond to a telescopic boom conveyor where a telescopic function of the conveyor 102 can be generated by a moving transfer position for an item flow between individual belt conveyors, i.e. the two conveyors positioned side by side. In this regard, the conveyor 102 can be supported by a ceiling mounted lifting device e.g. the lift device 110.

In an example operation, upon arrival of transport carriers, such as trucks, at a distribution center, items can be unloaded. In this regard, using the item conveying apparatus 101, as described in accordance with various example embodiments herein, these items can be unloaded. To this end, the items can be unloaded on the conveyor 102 from the transport carriers and can be further sorted for delivery to customers/retailers. Further, the transport carriers can be reloaded via the item conveying apparatus 101 with other set of items for transportation. In this aspect, the items can be are generally loaded and/or unloaded from the conveyor 102 by extending the plurality of conveyor segments 103, 104, and 105 of the conveyor 102 and raising/lowering down the conveyor 102 at a desired height relative to the ground surface, as in required. In some example embodiments, an item from a carrier accumulation zone of the transport carrier may be transferred by hand onto the conveyor 102, which can thereafter convey the item into a distribution center via either a travelling conveyor belt or a set of rotating rollers positioned aside to the conveyor 102.

The control unit referred herein may include hardware used to implement the various illustrative logics, logical blocks, modules, and circuits described in connection with the aspects disclosed herein. It may include a general-purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

## Claims

1. An item conveying apparatus (101) comprising:
a lift device (110) suspended from a ceiling (150);
a conveyor (102) at least partially engaged with the lift device (110), wherein the lift device (110) is configured to manipulate a positioning of the conveyor (102), the conveyor (102) comprising:
a conveyor frame;
a plurality of conveyor segments (103, 104, 105) collectively defining a conveying surface for an item, wherein the conveyor frame supports the plurality of conveyor segments, wherein at least a portion of the plurality of conveyor segments is positioned within a portion defined by the conveyor frame, wherein at least one conveyor segment of the plurality of the conveyor segments (103, 104, 105), upon receiving a command from a control unit, is adapted to:
extend, outwards from the conveyor frame to move the conveyor (102) into an operational position (100); and
retract, inwards within the conveyor frame to move the conveyor (102) into a parking position (300), wherein in the parking position (300), the plurality of conveyor segments (103, 104, 105) are at least partially retracted within the conveyor frame and the conveyor (102) is raised up, by the lift device (110), towards the ceiling (150) at a parking height; **characterized in that** each conveyor segment of the plurality of conveyor segments (103, 104, 105) is movable relative to the conveyor frame and remainder of the plurality of conveyor segments (103, 104, 105), wherein the plurality of conveyor segments (103, 104, 105) are pivotably engaged relative to each other.

2. The item conveying apparatus (101) of claim 1, wherein the lift device (110) is an inverted scissor lift.

3. The item conveying apparatus (101) of claim 1 or 2, wherein the lift device (110) comprises at least two actuator elements (111), adapted to:
lower an actuation platform (113) of the lift device (110) to lower a height of the conveyor (102) relative to a ground plane, wherein the actuation platform (113) is coupled to the at least one conveyor segment of the conveyor (102); or
raise the actuation platform (113) of the lift device (110) to raise the height of the conveyor (102) relative to the ground plane.

4. The item conveying apparatus (101) of one of claims 1-3, wherein the conveyor (102) is a roller conveyor defined between two side rails of the conveyor frame.

5. The item conveying apparatus (101) of one of claims 1-4, wherein the conveyor (102) comprises a plurality of drive wheel assemblies (116, 126) positioned within side rails defined by the conveyor frame, and wherein the drive wheel assemblies (116, 126) are adapted to move the at least one conveyor segment of the plurality of conveyor segments (103, 104, 105) relative to the conveyor frame.

6. The item conveying apparatus (101) of one of claims 1-5, wherein the conveyor (102) is also adapted to be moved to a retracted position (200), wherein
in the operational position (100), the plurality of conveyor segments (103, 104, 105) of the conveyor (102) are extended outwards from the conveyor frame; and
in the retracted position (200), the plurality of conveyor segments (103, 104, 105) of the conveyor (102) are partially retracted within the conveyor frame.

7. The item conveying apparatus (101) of one of claims 1-6, wherein the conveyor (102) is installable above an in-feed conveyor (106) of a material handling environment, wherein the in-feed conveyor (106) is not part of the item conveying apparatus (101) and wherein one end of the conveyor (102) extends to define an inclined path adapted to drop a first item from the conveyor (102) onto a first conveying surface of the in-feed conveyor (106).

8. The item conveying apparatus (101) of one of claims 1-7, wherein the conveyor (102) is installable below an out-feed conveyor (106), wherein the out-feed conveyor (106) is not part of the item conveying apparatus (101) and wherein one end of the out-feed conveyor (106) extends to define an inclined path adapted to, drop a second item from a second conveying surface of the out-feed conveyor (106) onto the conveyor (102).

9. The item conveying apparatus (101) of one of claims 1-8, wherein the conveyor (102) is installable aside of a feed conveyor (106), wherein the feed conveyor (106) is not part of item conveying apparatus (101) and wherein the conveyor and the feed conveyor (106) includes a first side deflector and a second side deflector (109) respectively and wherein the first side deflector and the second side deflector are adapted to
deflect an incoming third item from the feed conveyor to the conveyor; and
deflect an incoming fourth item from the conveyor (102) to the feed conveyor.

10. The item conveying apparatus (101) of one of claims 1-9, further comprising an item handling unit (702), wherein the conveyor (102) is coupled to the item handling unit (702), the item handling unit (702) comprising:
an item transfer section (704), wherein at least a portion of the item transfer section (704) is engaged to the lift device (110); and
a sectional floor unit (706) coupled to the item transfer section (704), the sectional floor unit (706) configured to interface with an item carriage section (708) of a vehicle (710), the sectional floor unit (706) comprising:
a transfer flap (712) coupled to an end of the conveyor (102), the transfer flap (712) configured to interface with a portion of the item carriage section (708) of the vehicle (710); and
a sectional floor garage (718) defined beneath the conveyor (102), the sectional floor garage (718) configured to receive a sectional floor surface (720) of the vehicle (710).

11. The item conveying apparatus (101) of claim 10, wherein the sectional floor unit (706) of the item handling unit (702) is coupled to the item carriage section (708) of the vehicle (710) based on an interfacing of the transfer flap (712) with the portion of the item carriage section (708) and a connection of a first drive cable of the sectional floor unit (706) to a second drive cable of the item carriage section (708), wherein at least one of the first drive cable and the second drive cable is configured to slidably pull the sectional floor surface (720) of the vehicle (710) into the sectional floor garage (718).

12. A method for handling items in a material handling environment, the method comprising:
actuating a lift device (110) to position a conveyor (102) coupled to the lift device (110) at a predetermined height relative to an item carriage section (708) of a transport carrier, wherein the conveyor (102) is suspended from a ceiling (150);
extending at least one conveyor segment of a plurality of conveyor segments (103, 104, 105) of the conveyor (102), outwards to position the conveyor (102) in an operating position (100), wherein at least a portion of the plurality of conveyer segments is positioned within a portion defined by a conveyer frame, wherein said plurality of conveyor segments (103, 104, 105) collectively define a conveying surface for an item, wherein the conveyor frame supports the plurality of conveyor segments (103, 104, 105);
wherein
upon positioning the conveyor (102) in the operating position (100), signaling one of: (i) an outflow of a first item by transferring the first item from a source conveyor (106) to the conveyor (102) or (ii) an inflow of a second item by transferring the second item from the conveyor (102) to the source conveyor (106); and
retracting, the at least one conveyor segment of the conveyor (102), inwards so as to position the conveyor (102) in a parking position (300), wherein in the parking position (300), the plurality of conveyor segments (103, 104, 105) are at least partially retracted within the conveyor frame and the conveyor (102) is raised up, by the lift device (110), towards the ceiling (150) at a parking height; **characterized in that** each conveyor segment of the plurality of conveyor segments (103, 104, 105) is movable relative to the conveyor frame and remainder of the plurality of conveyor segments (103, 104, 105), wherein the plurality of conveyor segments (103, 104, 105) are pivotally engaged relative to each other.

13. The method of claim 12 wherein the conveyor (102) is coupled to an item handling unit (702) comprising an item transfer section (704), a sectional floor unit (706) coupled to the item transfer section (704) and comprising a transfer flap (712) coupled to an end of the conveyer (102) and a sectional floor garage defined beneath the conveyer (102), and wherein the method further comprises:
engaging the lift device (110) to at least a portion of the item transfer section (704);
interfacing the item carriage section (708) of the transport carrier with the sectional floor unit (706) of the item handling unit (702);
interfacing the transfer flap (712) with a portion of the item carriage section (708) of the transport carrier; and
receiving a sectional floor surface (720) of the item carriage section (708) of the transport carrier into the sectional floor garage (718) defined beneath the conveyor (102) to unload a plurality of items from the transport carrier onto the conveyor (102) of the item handling unit (702).

14. The method of claim 12 or 13, wherein the lift device (110) is an inverted scissor lift.

15. The method of one of claims 12-14, wherein the conveyor (102) is a roller conveyor defined between two side rails of the conveyor frame.

## Patentansprüche

1. Artikelfördereinrichtung (101), umfassend:
eine Hebevorrichtung (110), die von einer Decke (150) gehängt ist;
einen Förderer (102), der mindestens teilweise mit der Hebevorrichtung (110) im Eingriff ist, wobei die Hebevorrichtung (110) dazu konfiguriert ist, ein Positionieren des Förderers (102) zu manipulieren, der Förderer (102) umfassend:
einen Fördererrahmen;
eine Vielzahl von Förderersegmenten (103, 104, 105), die zusammen eine Förderfläche für einen Artikel definieren, wobei der Fördererrahmen die Vielzahl von Förderersegmenten unterstützt,
wobei mindestens ein Teil der Vielzahl von Förderersegmenten innerhalb eines von dem Fördererrahmen definierten Teils positioniert ist,
wobei mindestens ein Förderersegment der Vielzahl von Förderersegmenten (103, 104, 105) nach Empfangen eines Befehls von einer Steuereinheit dazu angepasst ist:
sich von dem Fördererrahmen nach außen auszufahren, um den Förderer (102) in eine Betriebsposition (100) zu bewegen; und
sich innerhalb des Fördererrahmens nach innen einzufahren, um den Förderer (102) in eine Parkposition (300) zu bewegen, wobei die Vielzahl von Förderersegmenten (103, 104, 105) in der Parkposition (300) mindestens teilweise innerhalb des Fördererrahmens eingefahren sind und der Förderer (102) von der Hebevorrichtung (110) in Richtung der Decke (150) auf eine Parkhöhe angehoben ist; **gekennzeichnet dadurch, dass** jedes Förderersegment der Vielzahl von Förderersegmenten (103, 104, 105) relativ zu dem Fördererrahmen und dem Rest der Vielzahl von Förderersegmenten (103, 104, 105) beweglich ist, wobei die Vielzahl von Förderersegmenten (103, 104, 105) relativ zueinander schwenkbar im Eingriff sind.

2. Artikelfördereinrichtung (101) nach Anspruch 1, wobei die Hebevorrichtung (110) eine umgekehrte Scherenhebebühne ist.

3. Artikelfördereinrichtung (101) nach Anspruch 1 oder 2, wobei die Hebevorrichtung (110) mindestens zwei Betätigerelemente (111) umfasst, die dazu angepasst sind:
eine Betätigungsplattform (113) der Hebevorrichtung (110) abzusenken, um eine Höhe des Förderers (102) relativ zu einer Grundebene abzusenken, wobei die Betätigungsplattform (113) mit dem mindestens einen Förderersegment des Förderers (102) gekoppelt ist; oder
die Betätigungsplattform (113) der Hebevorrichtung (110) anzuheben, um die Höhe des Förderers (102) relativ zu der Grundebene anzuheben.

4. Artikelfördereinrichtung (101) nach einem der Ansprüche 1 bis 3, wobei der Förderer (102) ein Rollenförderer ist, der zwischen zwei Seitenschienen des Fördererrahmens definiert ist.

5. Artikelfördereinrichtung (101) nach einem der Ansprüche 1 bis 4, wobei der Förderer (102) eine Vielzahl von Antriebsradanordnungen (116, 126) umfasst, die innerhalb von durch den Fördererrahmen definierten Seitenschienen positioniert sind, und wobei die Antriebsradanordnungen (116, 126) dazu angepasst sind, das mindestens eine Förderersegment der Vielzahl von Förderersegmenten (103, 104, 105) relativ zu dem Fördererrahmen zu bewegen.

6. Artikelfördereinrichtung (101) nach einem der Ansprüche 1 bis 5, wobei der Förderer (102) auch dazu angepasst ist, in eine eingefahrene Position (200) bewegt zu werden, wobei
in der Betriebsposition (100) die Vielzahl von Förderersegmenten (103, 104, 105) des Förderers (102) von dem Fördererrahmen nach außen ausgefahren sind; und
in der eingefahrenen Position (200) die Vielzahl von Förderersegmenten (103, 104, 105) des Förderers (102) teilweise innerhalb des Fördererrahmens eingefahren sind.

7. Artikelfördereinrichtung (101) nach einem der Ansprüche 1 bis 6, wobei der Förderer (102) über einem Einführförderer (106) einer Materialhandhabungsumgebung installiert werden kann, wobei der Einführförderer (106) nicht Teil der Artikelfördereinrichtung (101) ist und wobei ein Ende des Förderers (102) dazu ausgefahren ist, einen geneigten Weg zu definieren, der dazu angepasst ist, einen ersten Artikel von dem Förderer (102) auf eine erste Förderfläche des Einführförderers (106) fallen zu lassen.

8. Artikelfördereinrichtung (101) nach einem der Ansprüche 1 bis 7, wobei der Förderer (102) unterhalb eines Ausführförderers (106) einer Materialhandhabungsumgebung installiert werden kann, wobei der Ausführförderer (106) nicht Teil der Artikelfördereinrichtung (101) ist und wobei ein Ende des Ausführförderers (106) dazu ausgefahren ist, einen geneigten Weg zu definieren, der dazu angepasst ist, einen zweiten Artikel von einer zweiten Förderfläche des Ausführförderers (106) auf den Förderer (102) fallen zu lassen.

9. Artikelfördereinrichtung (101) nach einem der Ansprüche 1 bis 8, wobei der Förderer (102) neben einem Zuführförderer (106) installiert werden kann, wobei der Zuführförderer (106) nicht Teil der Artikelfördereinrichtung (101) ist und wobei der Förderer und der Zuführförderer (106) jeweils eine erste Seitenumlenkvorrichtung und eine zweite Seitenumlenkvorrichtung (109) beinhalten und wobei die erste Seitenumlenkvorrichtung und die zweite Seitenumlenkvorrichtung dazu angepasst sind,
einen eingehenden dritten Artikel von dem Zuführförderer zu dem Förderer umzulenken; und
einen eingehenden vierten Artikel von dem Förderer (102) zu dem Zuführförderer umzulenken.

10. Artikelfördereinrichtung (101) nach einem der Ansprüche 1 bis 9, ferner umfassend eine Artikelhandhabungseinheit (702), wobei der Förderer (102) mit der Artikelhandhabungseinheit (702) gekoppelt ist, die Artikelhandhabungseinheit (702) umfassend:
einen Artikeltransferabschnitt (704), wobei mindestens ein Teil des Artikeltransferabschnitts (704) mit der Hebevorrichtung (110) im Eingriff ist; und
eine Sektionalbodeneinheit (706), die mit dem Artikeltransferabschnitt (704) gekoppelt ist, wobei die Sektionalbodeneinheit (706) dazu konfiguriert ist, mit einem Artikelverfahrschlittenabschnitt (708) eines Fahrzeugs (710) verbunden zu sein, die Sektionalbodeneinheit (706) umfassend:
eine Transferlasche (712), die mit einem Ende des Förderers (102) gekoppelt ist, wobei die Transferlasche (712) dazu konfiguriert ist, mit einem Teil des Artikelverfahrschlittenabschnitts (708) des Fahrzeugs (710) verbunden zu sein; und
eine Sektionalbodengarage (718), die unter dem Förderer (102) definiert ist, wobei die Sektionalbodengarage (718) dazu konfiguriert ist, eine Sektionalbodenfläche (720) des Fahrzeugs (710) zu empfangen.

11. Artikelfördereinrichtung (101) nach Anspruch 10, wobei die Sektionalbodeneinheit (706) der Artikelhandhabungseinheit (702), basierend auf einer Verbindung der Transferlasche (712) mit dem Teil des Artikelverfahrschlittenabschnitts (708) und auf einem Anschluss eines ersten Antriebskabels der Sektionalbodeneinheit (706) an ein zweites Antriebskabel des Artikelverfahrschlittenabschnitts (708), mit dem Artikelverfahrschlittenabschnitt (708) des Fahrzeugs (710) gekoppelt ist, wobei mindestens eines von dem ersten Antriebskabel und dem zweiten Antriebskabel dazu konfiguriert ist, die Sektionalbodenfläche (720) des Fahrzeugs (710) gleitend in die Sektionalbodengarage (718) zu ziehen.

12. Verfahren zum Handhaben von Artikeln in einer Materialhandhabungsumgebung, das Verfahren umfassend:
Betätigen einer Hebevorrichtung (110), um einen Förderer (102), der mit der Hebevorrichtung (110) in einer vorbestimmten Höhe relativ zu einem Artikelverfahrschlittenabschnitt (708) eines Transportträgers gekoppelt ist, zu positionieren, wobei der Förderer (102) von einer Decke (150) gehängt ist;
Ausfahren von mindestens einem Förderersegment einer Vielzahl von Förderersegmenten (103, 104, 105) des Förderers (102) nach außen, um den Förderer (102) in einer Betriebsposition (100) zu positionieren, wobei mindestens ein Teil der Vielzahl von Förderersegmenten innerhalb eines von einem Fördererrahmen definierten Teils positioniert ist, wobei die Vielzahl von Förderersegmenten (103, 104, 105) zusammen eine Förderfläche für einen Artikel definieren, wobei der Fördererrahmen die Vielzahl von Förderersegmenten (103, 104, 105) unterstützt;
wobei
nach dem Positionieren des Förderers (102) in der Betriebsposition (100), Signalisieren von einem aus Folgendem: (i) einem Abgang eines ersten Artikels durch Transferieren des ersten Artikels von einem Quellenförderer (106) zu dem Förderer (102) oder (ii) einem Eingang eines zweiten Artikels durch Transferieren des zweiten Artikels von dem Förderer (102) zu dem Quellenförderer (106); und
Einfahren des mindestens einen Förderersegments des Förderers (102) nach innen, um den Förderer (102) in eine Parkposition (300) zu positionieren, wobei die Vielzahl von Förderersegmenten (103, 104, 105) in der Parkposition (300) mindestens teilweise innerhalb des Fördererrahmens eingefahren sind und der Förderer (102) von der Hebevorrichtung (110) in Richtung der Decke (150) auf eine Parkhöhe angehoben ist; **gekennzeichnet dadurch, dass** jedes Förderersegment der Vielzahl von Förderersegmenten (103, 104, 105) relativ zu dem Fördererrahmen und dem Rest der Vielzahl von Förderersegmenten (103, 104, 105) beweglich ist, wobei die Vielzahl von Förderersegmenten (103, 104, 105) relativ zueinander schwenkbar im Eingriff sind.

13. Verfahren nach Anspruch 12, wobei der Förderer (102) mit einer Artikelhandhabungseinheit (702) gekoppelt ist, umfassend einen Artikeltransferabschnitt (704), eine Sektionalbodeneinheit (706), die mit dem Artikeltransferabschnitt (704) gekoppelt ist und eine Transferlasche (712) umfasst, die mit einem Ende des Förderers (102) gekoppelt ist, und eine Sektionalbodengarage, die unter dem Förderer (102) definiert ist, und wobei das Verfahren ferner Folgendes umfasst:
Eingreifen der Hebevorrichtung (110) in mindestens einen Teil des Artikeltransferabschnitts (704);
Verbinden des Artikelverfahrschlittenabschnitts (708) des Transportträgers mit der Sektionalbodeneinheit (706) der Artikelhandhabungseinheit (702);
Verbinden der Transferlasche (712) mit einem Teil des Artikelverfahrschlittenabschnitts (708) des Transportträgers; und
Empfangen einer Sektionalbodenfläche (720) des Artikelverfahrschlittenabschnitts (708) des Transportträgers in der Sektionalbodengarage (718), die unter dem Förderer (102) definiert ist, um eine Vielzahl von Artikeln von dem Transportträger auf den Förderer (102) der Artikelhandhabungseinheit (702) zu entladen.

14. Verfahren nach Anspruch 12 oder 13, wobei die Hebevorrichtung (110) eine umgekehrte Scherenhebebühne ist.

15. Verfahren nach einem der Ansprüche 12 bis 14, wobei der Förderer (102) ein Rollenförderer ist, der zwischen zwei Seitenschienen des Fördererrahmens definiert ist.

## Revendications

1. Appareil de transport d'articles (101) comprenant :
un dispositif de levage (110) suspendu à un plafond (150) ;
un transporteur (102) au moins partiellement en prise avec le dispositif de levage (110), dans lequel le dispositif de levage (110) est configuré pour manipuler un positionnement du transporteur (102), le transporteur (102) comprenant :
un châssis de transporteur ;
une pluralité de segments de transporteur (103, 104, 105) définissant collectivement une surface de transport pour un article, dans lequel le châssis de transporteur supporte la pluralité de segments de transporteur,
dans lequel au moins une partie de la pluralité de segments de transporteur est positionnée au sein d'une partie définie par le châssis de transporteur,
dans lequel au moins un segment de transporteur de la pluralité de segments de transporteur (103, 104, 105), lors de la réception d'un ordre provenant d'une unité de commande, est adapté pour :
s'étendre, vers l'extérieur à partir du châssis de transporteur pour déplacer le transporteur (102) dans une position opérationnelle (100) ; et
se rétracter, vers l'intérieur au sein du châssis de transporteur pour déplacer le transporteur (102) dans une position de stationnement (300), dans lequel dans la position de stationnement (300), la pluralité de segments de transporteur (103, 104, 105) sont au moins partiellement rétractés au sein du châssis de transporteur et le transporteur (102) est soulevé, par le dispositif de levage (110), vers le plafond (150) à une hauteur de stationnement ; **caractérisé en ce que** chaque segment de transporteur de la pluralité de segments de transporteur (103, 104, 105) est mobile par rapport au châssis de transporteur et au reste de la pluralité de segments de transporteur (103, 104, 105), dans lequel la pluralité de segments de transporteur (103, 104, 105) sont en prise les uns avec les autres de manière pivotante.

2. Appareil de transport d'articles (101) selon la revendication 1, dans lequel le dispositif de levage (110) est une plate-forme élévatrice à ciseaux inversée.

3. Appareil de transport d'articles (101) selon la revendication 1 ou 2, dans lequel le dispositif de levage (110) comprend au moins deux éléments actionneurs (111), adaptés pour :
abaisser une plate-forme d'actionnement (113) du dispositif de levage (110) pour abaisser une hauteur du transporteur (102) par rapport à un plan de sol, dans lequel la plate-forme d'actionnement (113) est couplée à l'au moins un segment de transporteur du transporteur (102) ; ou
élever la plate-forme d'actionnement (113) du dispositif de levage (110) pour élever la hauteur du transporteur (102) par rapport au plan de sol.

4. Appareil de transport d'articles (101) selon l'une des revendications 1 à 3, dans lequel le transporteur (102) est un transporteur à rouleaux défini entre deux rails latéraux du châssis de transporteur.

5. Appareil de transport d'articles (101) selon l'une des revendications 1 à 4, dans lequel le transporteur (102) comprend une pluralité d'ensembles de roues motrices (116, 126) positionnés au sein de rails latéraux définis par le châssis de transporteur, et dans lequel les ensembles de roues motrices (116, 126) sont adaptés pour déplacer l'au moins un segment de transporteur de la pluralité de segments de transporteur (103, 104, 105) par rapport au châssis de transporteur.

6. Appareil de transport d'articles (101) selon l'une des revendications 1 à 5, dans lequel le transporteur (102) est également adapté pour être déplacé vers une position rétractée (200), dans lequel
dans la position opérationnelle (100), la pluralité de segments de transporteur (103, 104, 105) du transporteur (102) sont étendus vers l'extérieur du châssis de transporteur ; et
dans la position rétractée (200), la pluralité de segments de transporteur (103, 104, 105) du transporteur (102) sont partiellement rétractés au sein du châssis de transporteur.

7. Appareil de transport d'articles (101) selon l'une des revendications 1 à 6, dans lequel le transporteur (102) peut être installé au-dessus d'un transporteur de chargement (106) d'un environnement de manipulation de matériaux, dans lequel le transporteur de chargement (106) ne fait pas partie de l'appareil de transport d'articles (101) et dans lequel une extrémité du transporteur (102) s'étend pour définir un plan incliné adapté pour laisser tomber un premier article depuis le transporteur (102) sur une première surface de transport du transporteur de chargement (106).

8. Appareil de transport d'articles (101) selon l'une des revendications 1 à 7, dans lequel le transporteur (102) peut être installé sous un transporteur de déchargement (106), dans lequel le transporteur de déchargement (106) ne fait pas partie de l'appareil de transport d'article (101) et dans lequel une extrémité du transporteur de déchargement (106) s'étend pour définir un plan incliné adapté pour faire tomber un deuxième article depuis une deuxième surface de transport du transporteur de déchargement (106) sur le transporteur (102).

9. Appareil de transport d'articles (101) selon l'une des revendications 1 à 8, dans lequel le transporteur (102) peut être installé à côté d'un transporteur d'alimentation (106), dans lequel le transporteur d'alimentation (106) ne fait pas partie de l'appareil de transport d'articles (101) et dans lequel le transporteur et le transporteur d'alimentation (106) incluent respectivement un premier déflecteur latéral et un deuxième déflecteur latéral (109) et dans lequel le premier déflecteur latéral et le deuxième déflecteur latéral sont adaptés pour
détourner un troisième article entrant du transporteur d'alimentation vers le transporteur ; et
détourner un quatrième article entrant du transporteur (102) vers le transporteur d'alimentation.

10. Appareil de transport d'articles (101) selon l'une des revendications 1 à 9, comprenant en outre une unité de manipulation d'articles (702), dans lequel le transporteur (102) est couplé à l'unité de manipulation d'articles (702), l'unité de manipulation d'articles (702) comprenant :
une section de transfert d'articles (704), dans lequel au moins une partie de la section de transfert d'articles (704) est en prise avec le dispositif de levage (110) ; et
une unité de plancher sectionnel (706) couplée à la section de transfert d'articles (704), l'unité de plancher sectionnel (706) étant configurée pour interagir avec une section chariot d'articles (708) d'un véhicule (710), l'unité de plancher sectionnel (706) comprenant :
un volet de transfert (712) couplé à une extrémité du transporteur (102), le volet de transfert (712) étant configuré pour interagir avec une partie de la section chariot d'articles (708) du véhicule (710) ; et
un garage à plancher sectionnel (718) défini sous le transporteur (102), le garage à plancher sectionnel (718) étant configuré pour recevoir une surface de plancher sectionnel (720) du véhicule (710).

11. Appareil de transport d'articles (101) selon la revendication 10, dans lequel l'unité de plancher sectionnel (706) de l'unité de manipulation d'articles (702) est couplée à la section chariot d'articles (708) du véhicule (710) sur la base d'une interaction du volet de transfert (712) avec la partie de la section chariot d'articles (708) et une connexion d'un premier câble d'entraînement de l'unité de plancher sectionnel (706) à un deuxième câble d'entraînement de la section chariot d'articles (708), dans lequel au moins l'un du premier câble d'entraînement et du deuxième câble d'entraînement est configuré pour tirer par glissement la surface de plancher sectionnel (720) du véhicule (710) dans le garage à plancher sectionnel (718).

12. Procédé de manipulation d'articles dans un environnement de manipulation de matériau, le procédé comprenant :
l'actionnement d'un dispositif de levage (110) pour positionner un transporteur (102) couplé au dispositif de levage (110) à une hauteur prédéterminée par rapport à une section chariot d'articles (708) d'un support de transport, dans lequel le transporteur (102) est suspendu au plafond (150) ;
l'extension d'au moins un segment de transporteur d'une pluralité de segments de transporteur (103, 104, 105) du transporteur (102), vers l'extérieur pour positionner le transporteur (102) dans une position de fonctionnement (100), dans lequel au moins une partie de la pluralité de segments de transporteur est positionnée au sein d'une partie définie par un châssis de transporteur, dans lequel ladite pluralité de segments de transporteur (103, 104, 105) définit collectivement une surface de transport pour un article, dans lequel le châssis de transporteur supporte la pluralité de segments de transporteur (103, 104, 105) ; dans lequel
lors du positionnement du transporteur (102) dans la position de fonctionnement (100), la signalisation d'un parmi : (i) un flux sortant d'un premier article par transfert du premier article d'un transporteur source (106) vers le transporteur (102) ou (ii) un flux entrant d'un deuxième article par transfert du deuxième article du transporteur (102) vers le transporteur source (106) ; et
la rétraction de l'au moins un segment de transporteur du transporteur (102) vers l'intérieur de sorte à positionner le transporteur (102) dans une position de stationnement (300), dans lequel dans la position de stationnement (300), la pluralité de segments de transporteur (103, 104, 105) sont au moins partiellement rétractés au sein du châssis de transporteur et le transporteur (102) est soulevé, par le dispositif de levage (110), vers le plafond (150) à une hauteur de stationnement ; **caractérisé en ce que** chaque segment de transporteur de la pluralité de segments de transporteur (103, 104, 105) est mobile par rapport au châssis de transporteur et au reste de la pluralité de segments de transporteur (103, 104, 105), dans lequel la pluralité de segments de transporteur (103, 104, 105) sont en prise les uns avec les autres de manière pivotante.

13. Procédé selon la revendication 12, dans lequel le transporteur (102) est couplé à une unité de manipulation d'articles (702) comprenant une section de transfert d'articles (704), une unité de plancher sectionnel (706) couplée à la section de transfert d'articles (704) et comprenant un volet de transfert (712) couplé à une extrémité du transporteur (102) et un garage à plancher sectionnel défini sous le transporteur (102), et dans lequel le procédé comprend en outre :
la mise en prise du dispositif de levage (110) avec au moins une partie de la section de transfert d'articles (704) ;
l'interaction de la section chariot d'articles (708) du support de transfert avec l'unité de plancher sectionnel (706) de l'unité de manipulation d'articles (702) ;
l'interaction du volet de transfert (712) avec une partie de la section chariot d'articles (708) du support de transfert ; et
la réception d'une surface de plancher sectionnel (720) de la section chariot d'articles (708) du support de transport dans le garage à plancher sectionnel (718) défini sous le transporteur (102) pour décharger une pluralité d'articles du support de transport sur le transporteur (102) de l'unité de manipulation d'articles (702).

14. Procédé selon la revendication 12 ou 13, dans lequel le dispositif de levage (110) est une plate-forme élévatrice à ciseaux inversée.

15. Procédé selon l'une des revendications 12 à 14, dans lequel le transporteur (102) est un transporteur à rouleaux défini entre deux rails latéraux du châssis de transporteur.
